(19)

**Europäisches Patentamt**
**European Patent Office**
**Office européen des brevets**

(11) **EP 4 134 874 B1**

(12) **EUROPEAN PATENT SPECIFICATION**

(45) Date of publication and mention
of the grant of the patent:
**11.12.2024 Bulletin 2024/50**

(21) Application number: **21190615.1**

(22) Date of filing: **10.08.2021**

(51) International Patent Classification (IPC):
**G06N 3/063** (2023.01)     **G06N 3/0464** (2023.01)
**G06F 7/544** (2006.01)     **G06F 17/16** (2006.01)
**G06F 11/16** (2006.01)

(52) Cooperative Patent Classification (CPC):
**G06N 3/063; G06F 7/5443; G06F 11/1637;
G06F 11/1641; G06F 17/16; G06N 3/0464;**
G06F 11/1675

(54) **APPARATUS AND METHOD FOR DIAGNOSTIC COVERAGE OF A NEURAL NETWORK ACCELERATOR**

VORRICHTUNG UND VERFAHREN ZUR DIAGNOSTISCHEN ABDECKUNG EINES NEURONALEN NETZWERKBESCHLEUNIGERS

APPAREIL ET PROCÉDÉ DE COUVERTURE DE DIAGNOSTIC D'UN ACCÉLÉRATEUR DE RÉSEAU DE NEURONES ARTIFICIELS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.02.2023 Bulletin 2023/07**

(73) Proprietor: **Continental Autonomous Mobility
Germany GmbH
85057 Ingolstadt (DE)**

(72) Inventor: **Ganguly, Shaumik
81739 München (DE)**

(74) Representative: **Continental Corporation
c/o Continental Automotive GmbH
Intellectual Property
Postfach 83 01 16
81701 München (DE)**

(56) References cited:
- **DONG BO ET AL: "OR-ML: Enhancing Reliability for Machine Learning Accelerator with Opportunistic Redundancy", 2021 DESIGN, AUTOMATION & TEST IN EUROPE CONFERENCE & EXHIBITION (DATE), EDAA, 1 February 2021 (2021-02-01), pages 739 - 742, XP033941236, DOI: 10.23919/DATE51398.2021.9474016**
- **OZEN ELBRUZ ET AL: "Low-Cost Error Detection in Deep Neural Network Accelerators with Linear Algorithmic Checksums", JOURNAL OF ELECTRONIC TESTING., vol. 36, no. 6, 6 January 2021 (2021-01-06), NL, pages 703 - 718, XP055882779, ISSN: 0923-8174, Retrieved from the Internet <URL:https://www.eng.auburn.edu/~vagrawal/JETTA/FULL_ISSUE_36-6/P02_36-6_Ozen_p703-718.pdf> [retrieved on 20220124], DOI: 10.1007/s10836-020-05920-2**
- **SAFARPOUR MEHDI ET AL: "Algorithm Level Error Detection in Low Voltage Systolic Array", IEEE TRANSACTIONS ON CIRCUITS AND SYSTEMS II: EXPRESS BRIEFS, 6 July 2021 (2021-07-06), USA, pages 1 - 1, XP055882784, ISSN: 1549-7747, Retrieved from the Internet <URL:https://ieeexplore.ieee.org/stampPDF/getPDF.jsp?tp=&arnumber=9475533&ref=> [retrieved on 20220124], DOI: 10.1109/TCSII.2021.3094923**

## Description

BACKGROUND

An emerging technology field is machine learning or Artificial Intelligence (AI), with a neural network being one type of a machine learning model. Artificial Intelligence is widely used in various automotive applications, more specifically Convolutional Neural Networks (CNN) are found to provide significant accuracy improvements compared to traditional algorithms for Perception and other applications. Neural networks such as CNN's have demonstrated excellent performance at tasks such as hand-written digit classification and face detection. Additionally, neural networks have also shown promise for performing well in other, more challenging, visual classification tasks. Other applications for neural networks include speech recognition, language modeling, sentiment analysis, text prediction, and others.

However, they are often restricted to non-safety-critical functions, owing to a dearth of AI Hardware and Software that can fulfill safety requirements such as ISO 26262. Most AI Accelerators still do not claim to fulfill any ASIL level independently, some claim to qualify for "most stringent safety compliance standards" with plans to reach ASIL D compliance in the future. The field of safe AI acceleration may be characterized as still in its nascent stages.

In a typical deployment of a machine learning algorithm for real-time or near-real-time use, a software application supplies a neural network to an inference accelerator hardware engine. Often the accelerator is a Multiply-Accumulate (MAC) Array comprising multiple processing elements each capable of performing multiply-and-add or multiply-accumulate operations. When the inference accelerator is operating in a safety-critical environment, it is desired to monitor the inference accelerator to check for abnormal or faulty behavior. A typical implementation for monitoring the inference accelerator inserts monitoring logic into the inference accelerator processing hardware sub-blocks. For example, a machine check architecture is a mechanism whereby monitoring logic in the processing hardware checks for abnormal behavior.

Fulfillment of reliability requirements and regulations, etc., may require ensuring a hardware reliability level including continuous fault detection. In order to fulfill the required diagnostic coverage to detect and protect against random hardware faults during continuous operation, many existing popular fault detection and handling techniques used for microcontrollers are also applicable and can be used for AI accelerators. However, these techniques may have disadvantages.

A Lockstep Core method (US5915082A, WO2011117155A1), with two hardware resources running the same function and comparing results, is a widely used approach in automotive Electronic Control Units (ECU's) to achieve high diagnostic coverage. This approach can potentially claim a diagnostic coverage of 100% of compute elements for single point faults; however, it requires doubling the hardware resources, which has an adverse impact on the cost, space, and power budget.

Use of double hardware resources as part of the Lockstep approach may add cost, area and power consumption, introducing performance inefficiencies, thus limiting its use to only high-end products with enough performance and power margin to compensate these shortcomings.

The article by B. Dong et al., "OR-ML: Enhancing Reliability for machine Learning Accelerator with Opportunistic Redundancy", in DATE 2021, describes the use of redundant processors to verify operation. The article by E. Ozen et al. entitled "Low-Cost Error Detection in Deep Neural Network Accelerators with Linear Algorithmic Checksums" in J. of Electronic Testing vol. 36, no. 6, 2021, also describes the use of redundant processing to verify operation. The article by M. Safarapour et al., entitled "Algorithmic Level Error Detection in Low Voltage Systolic Array", in IEEE Trans. On Circuits and Systems, 2021, discloses the use of redundant processor to perform a subset of operations for verification.

Likewise, use of built-in self-test (BIST) together with functional logic may provide high diagnostic coverage, but may introduce latency overheads in addition to the required runtime for the self-tests, as many implementations need to safely pause, store intermediate results of the function application to run the self-test and then restart the function afterwards, thereby causing additional performance degradation. Retention of intermediate results of the application while performing the self-test is another major concern. This approach also requires additional circuitry to be implemented.

There also exist pure software implementations capable of ensuring the required diagnostic coverage of certain hardware, using Software Test Libraries (STL). This approach does not require additional circuitry in the hardware, as it performs safety checks at a software level. However, an undesired side effect of the high-level approach may be to make it difficult to achieve high fault coverage of the hardware, especially for a Multiply-Accumulate (MAC) array, which for neural network accelerators may constitute a major portion of the hardware. More details on the state of the art can be derived from the Functional Safety Standard of ISO26262.

The inventive approach as described below provides improvements in reducing the added cost of additional hardware resources to achieve high coverage as compared to existing approaches (e.g. redundant hardware for a lockstep approach or BIST circuitry for self-test). Another improvement concerns the reduction of additional runtime overheads, which might be due to switching between the function application and self-test or software-based safety tests at runtime, without compromising on diagnostic coverage. Likewise, the inventive approach can minimize or eliminate a potential break in the flow of operation which might be required both in the case of BIST and of STL. Finally, the inventive approach may offer a deterministic diagnostic coverage of AI hardware accelerators, since many existing accelerators do not include a functionality to provide deterministic diagnostic coverage.

Neural Networks (NN) are known to be highly compute intensive applications, especially those involving convolutions and Matrix Multiplications, which are essentially Multiply-Accumulate (MAC) operations. A typical Convolutional Neural Network (CNN) application may comprise convolutions which account for more than 90% of its computational requirements. As a result, AI Hardware Accelerators or inference accelerators may have multiple MAC processors, or the equivalent, consuming much of the active processor area (excluding memory), total processing power, etc. Our solution takes advantage of this unique feature of NN and AI accelerators, which accelerate applications such as CNN, Long short-term memory (LSTM), Recurrent Neural Networks (RNN), etc. Indeed, the concept may find application for any architecture comprising a MAC array, thereby ensuring a high safety coverage of such an array.

A convolution or matrix multiplication is an operation comprising multiple MAC operations, whereby an input matrix [x] and a filter matrix [w] are used as inputs and an output matrix [y] is generated. Existing accelerators may perform these computations using a cluster of Processing Engines (PE) as a MAC Array, where each PE is responsible to perform one MAC operation. The size of the MAC Array is one of the factors determining the parallelizability of the architecture and is constrained by factors such as the internal memory to store input data and intermediate results of the computations, or the availability of Input/Output (IO) or power or silicon area. For example, a simple 3x3 convolution would require at most 9 PE to permit all operations of a matrix multiplication to happen in parallel. The operations are then repeated for each successive convolution to be performed. The repeated or continuous operation may be often found in real-time data processing applications, such as those use cases found in automotive applications.

In implementations, CNNs typically perform overlapped convolutions with an input matrix of higher dimensionality together with a small filter matrix. The input matrix is sliced into small overlapping matrices, followed by the dot product and summation of each small input matrix with the filter matrix to complete the corresponding convolution operation. As a result, each input data value of the input matrix, in successive iterations, is multiplied by a different weight of the filter matrix and ends up being multiplied by all the weights of the filter matrix individually.

The inventive solution proposes to include one or more additional or shared processing engines into the MAC Array, which might be called Safe Processing Engine (SPE), and which in embodiments performs three operations. First, the sum of the intermediate multiplications of the same input data element with different weights of the filter matrix. We note that the corresponding multiplications are already performed in existing different PE's of the MAC Array, so the SPE only needs to perform the corresponding additions; the same input data element has a different relative position in every successive slice of the matrix, which position may progress with each addition cycle.

Then, the SPE needs to perform the corresponding multiplication with the value corresponding to the weights. A comparison of the results permits to verify if the computations were performed correctly.

The number of additional processing elements in the SPE is a subject of design choice, including considerations of the number of PE's and the types of convolutions, as well as the kernel size that the hardware intends to support. In embodiments, the system only needs one processing element in the SPE for every convolution, or for every second convolution. In other embodiments, multiple processing elements in the SPE serve to accelerate the calculations used to verify the operation of the MAC Array. A tradeoff exists, where the number of operations performed by an SPE increases as the number of individual PE's to be verified per cycle increases. A system can be envisaged where verification is performed at widely spaced regular intervals, depending on the safety requirements of the system.

The above-mentioned concept is valid for checking and verifying standard convolutions, and also other variants of convolutions, matrix multiplication operations, etc. Various embodiments also support strided convolutions, wherein the convolution is performed with strides greater than 1 (default stride is equal to 1), pointwise convolution (convolutions with kernel size equal to 1) and Matrix Multiplication operations.

The inventive approach may provide an improved coverage of hardware faults with fewer hardware resources as compared to other approaches, whereby we note that the number of cycles needed to perform a check or verification will increase accordingly. Additional advantages of embodiments may include no or limited requirements for redundant hardware, which - for example - may mean significantly reduced HW in comparison to lockstep approaches, or no necessity of additional circuitry for performing BIST at startup. Likewise, there may be no need of an additional system reboot typically required after a BIST operation (as BIST may well lose the state of internal registers during test, requiring a reset after BIST). Also, embodiments may offer significantly higher coverage compared to software approaches, and even certain BIST methods. In embodiments, it may well be possible to save cost, area, power as compared to other approaches without degrading speed performance and while maintaining high and continuous coverage. Embodiments may be capable of ensuring coverage comparable or close to that of the lockstep approach for NN Accelerators or other convolution accelerators with significantly reduced overall additional computations.

The inventive approach provides a new hardware architecture with hardware safety mechanisms integrated into the design to achieve high diagnostic coverage against random hardware faults, thereby ensuring the hardware to be capable of implementing safety-critical applications in an efficient manner.

Embodiments of the inventive concept may permit to reduce or even eliminate the need of periodic tests for the MAC Array of an accelerator, which often accounts for a substantial portion of the area and computational needs of a hardware accelerator. Likewise, embodiments permit to have no break in the flow of operation, to perform any safety-related tests, and to obtain deterministic coverage of the accelerator. Embodiments also offer negligible compute and memory requirements for ensuring safety as compared to the overall compute and memory requirements of the acceleration function. Indeed, it can be envisaged to use embodiments for IC testing during the IC production flow.

BRIEF DESCRIPTION OF THE DRAWINGS

The advantages of the methods and mechanisms described herein may be better understood by referring to the following description in conjunction with the accompanying drawings, in which:

Fig. 1 shows an example of a 1D convolution in a MAC array;
Fig. 2 shows the addition of a safety check with SPE;
Fig. 3 shows the workings of the SPE to perform a safety check;
Fig.'s 4 and 5 show additional details of the workings of the SPE to perform a safety check;
FIG. 6 shows an example implementation of hardware for a Conv2D layer; and
Fig. 7 shows safety checks for different types of computations.

DETAILED DESCRIPTION OF IMPLEMENTATIONS

It will be appreciated that for simplicity and clarity of illustration, elements shown in the figures have not necessarily been drawn to scale. For example, the dimensions of some of the elements may be exaggerated relative to other elements.

Systems, apparatuses, and methods for implementing a safety processor framework for a safety-critical neural network application are disclosed herein. In one implementation, a system includes a safety-critical neural network application, a safety processor, and an inference accelerator engine. The safety processor receives an input image, test data (e.g., test vectors), and a neural network specification (e.g., layers and weights) from the safety-critical neural network application. The disclosed approach may be used for (but is not restricted to) AI Inference, wherein a trained AI Neural Network (NN) is compiled to be executed on a dedicated processor, also known as an Accelerator.

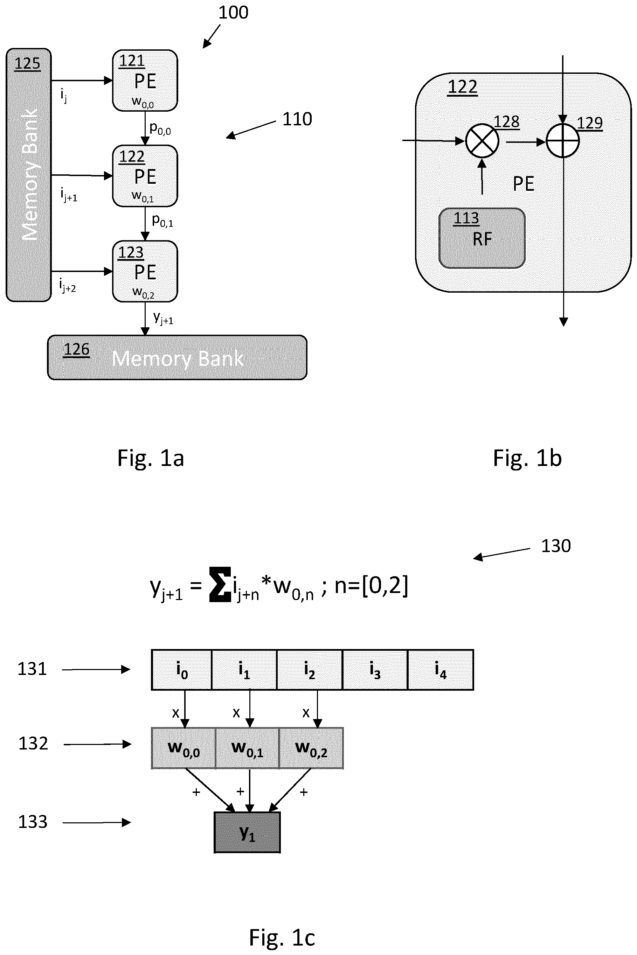

Referring now to Figure 1a, one implementation of a computing system 100, which is not according to the claimed invention, for a typical use case of an accelerator such as a Multiply-Accumulate (MAC) Array 110 is shown. At runtime, an NN binary (including the model graph, weights and parameters) is executed on the hardware as a convolution. Input data may be provided e.g. from a sensor such as a camera, to a first layer, the results of the first layer are used as input to the second layer and so on, to finally obtain the output of the application. This can be denoted as follows:

$$y = f(i);$$

where i is input from a sensor, f(.) is the non-linear NN model, and y is the output. In implementations, CNNs may perform overlapped convolutions with the input matrix of higher dimensionality (eg: camera input of 1920x1080x3) with a small filter matrix (eg: 3x3, 5x5, etc). Therefore, the input matrix is sliced into small overlapping matrices [xk] equivalent to the filter matrix [w], followed by the dot product and summation of each small input matrix with the filter matrix to complete the corresponding convolution operation:

$$yk = \sum\_i(xk\_i * w\_i)$$

where i ranges over the size of filter matrix,
k ranges to the number of slices of the input matrix,
xk_i is the ith input data element of [xk] (the kth slice of the input matrix [x]), w_i is the corresponding ith weight of the filter matrix,
and yk is the output value for the kth slice of input matrix.

As a result, each input data value of the input matrix, in successive iterations, is multiplied by a different weight of the filter matrix and ends up being multiplied by all the weights of the filter matrix individually.

The sum of the intermediate multiplications of the same input data element with different weights of the filter matrix is shown in hardware as 110. The system comprises multiple PE's arranged as a MAC Array. A succession of Processor Elements PE 121, 122, 123 receive inputs i[j], i[j+1], i[j+2]. Each PE contains a weight w[0,0], w[0,1], w[0,2] which is which is used as multiplicand by the corresponding PE. In this example, three inputs can be each multiplied by the corresponding weight, and the result be provided to the next processing element. If in embodiments one multiply-addition operation defines a cycle, then a P[0,0] result will be generated after each cycle, a P[0,1] result will be generated each cycle starting after the second cycle, and a result Y[j+1] will start being available after the third cycle. In this example, the results are sent to Memory Bank 126.

This particular example is based on, but not restricted to, the weight-stationary dataflow, wherein typically a PE, as shown in figure 1b comprises of a local memory element 113, known as Register File, which stores the weight element to be multiplied with different input elements being transferred via Memory Bank to the multiplier 128 and added to the partial-sum element in the adder 129, to complete one MAC operation. The illustration is only one example implementation amongst many other variations possible. The inventive approach is not restricted to a certain dataflow or implementation and finds application wherever a continuous data processing is required. Embodiments are elaborated in more detail in the subsequent paragraphs and figures.

Figure 1c shows a corresponding graphical view, where the input values are multiplied by their respective weights and summed according to equation 130. These individual input values are shown as i[0]...i[4] at 131, multiplied by the respective weights shown as 132, and summed to calculate the result shown as 133.

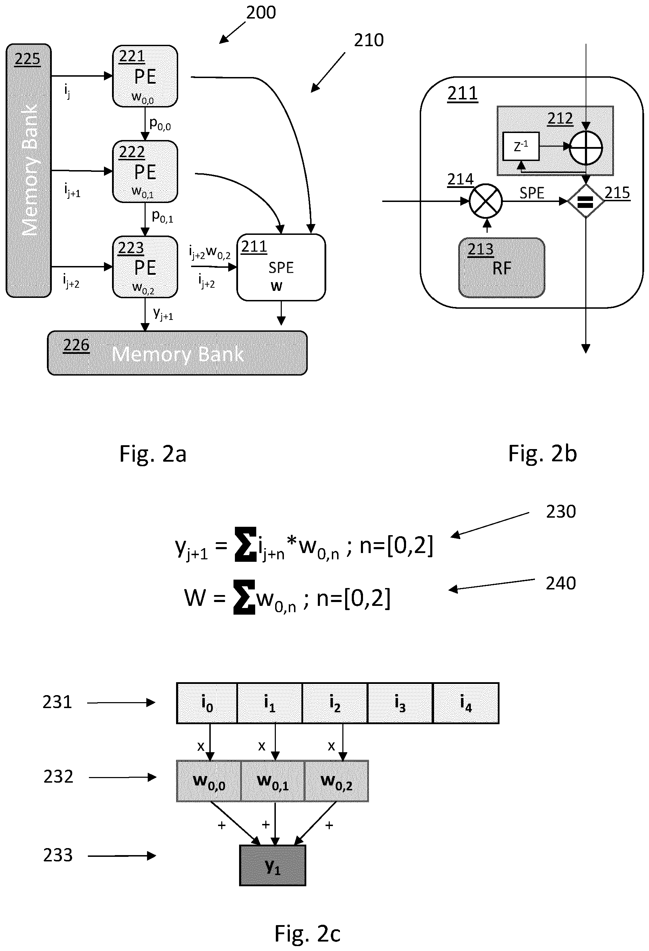

In Figure 2a is shown the same implementation 210 of a computing system 200 for a typical use case of an accelerator, together with an implementation of a Safe Processing Element SPE as 211. The system comprises multiple PE's arranged as a MAC Array. As in the system 100, the sum of the intermediate multiplications of the same input data element with different weights of the filter matrix is shown in hardware as 210. A succession of Processor Elements PE 221, 222, 223 receive inputs i[0], i[1], i[2]. Each PE contains a weight w[0,0], w[0,1], w[0,2] which is which is used as multiplicand by the corresponding PE. In this example, three inputs can be each multiplied by the corresponding weight, and the result be provided to the next processing element. If in embodiments one multiply-addition operation defines a cycle, then a P[0,0] result will be generated after each cycle, a P[0,1] result will be generated each cycle starting after the second cycle, and a result Y[j+1] will start being available after the third cycle. In this example, the results are sent to Memory Bank 226.

The calculations of the SPE 211 in this example embodiment and elaborated in figure 2b are now described. First, a sum of the intermediate multiplications of the same input data element with different weights of the filter matrix, as described in greater detail below, is performed. Note that the corresponding multiplications are already performed and available in different PE's of the MAC, so the SPE only needs to perform the additions of these values potentially generated in different machine cycles, in 212. Second, in the internal memory of register file 213 is stored the sum of the weights as shown in equation 240, which is multiplied by the input data in 214. Third, a comparison of the results from 212 and 214 are done in 215 to check for any faults leading to incorrect function of the hardware. More detailed description of the different stages is provided below.

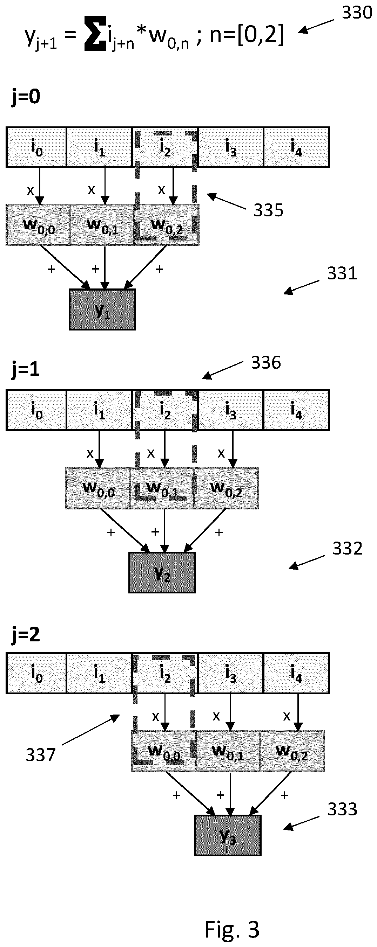

Turning to Figure 3, this elaborates the functions of SPE to perform safety checks on the hardware.

The figure illustrates a standard 1d convolution operation as shown in 330, wherein a stream of input data and weights are convolved to generate a stream of outputs 331, 332 and 333, potentially at different machine cycles running on a computing system 100.

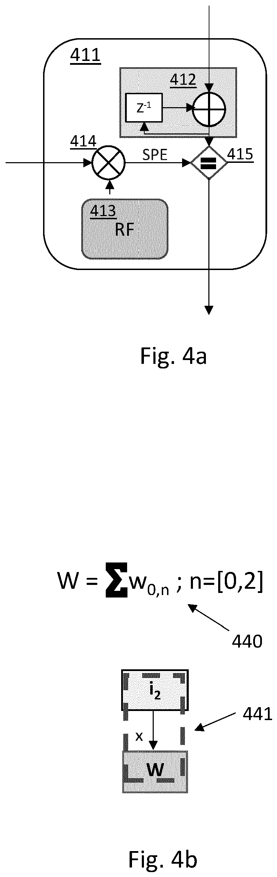

Figures 4a and 4b show additional details of the embodiment. The addition of the SPE 411 to, e.g., the computing system 200, as shown in Figure 4a, provides the possibility to perform safety checks on the hardware used to perform these operations and detect possible faults. First, a sum of intermediate multiplication results 335, 336 and 337, which are available in different PE's at different machine cycles, is performed in 412. As is shown, the same input data element has a different relative position in every successive slice of the matrix or Multiply-Accumulate cycle as denoted here by $xi\_i$. The resulting partial sum can be expressed as:

$$s1 = \sum\_i(xi\_i * w\_i)$$

where i ranges up to the size of filter matrix; it is noted that dimension K of the input slice also varies according to i, $xi\_i$ is the ith input data element of [xi] (the ith slice of the input matrix), $w\_i$ is the corresponding weight from the filter matrix, and s1 is the corresponding sum.

Second, the SPE of this example embodiment needs to perform the following multiplication:

$$s2 = xi\_i * W$$

where $xi\_i$ denotes the corresponding data from the input matrix, and W is $\Sigma_{w\_i}$, the sum of weights stored in local memory. An expression and graphic representation of this operation is shown as Figure 4b. The sum of weights as per 440 is locally stored in the register file 413. The multiplication as shown in Figure 4b in 441 is performed in 414.

In a third step of this example embodiment, a comparison of s1 and s2 is performed in 415 to verify if the computations were performed correctly. The result of the sum of 335, 336 and 337 should be equal to the result of 441. If there is a mismatch of the two values, this may be taken as indicative of a hardware failure. The evaluation of a mismatch may be a simple comparison of digits, or it may be a comparison of values which is dependent on the operations being performed.

In this example, it is noted that K operations of the SPE will be needed to verify the operation of K PE's or K operations performed by PE's, depending on the specific configuration of the MAC array.

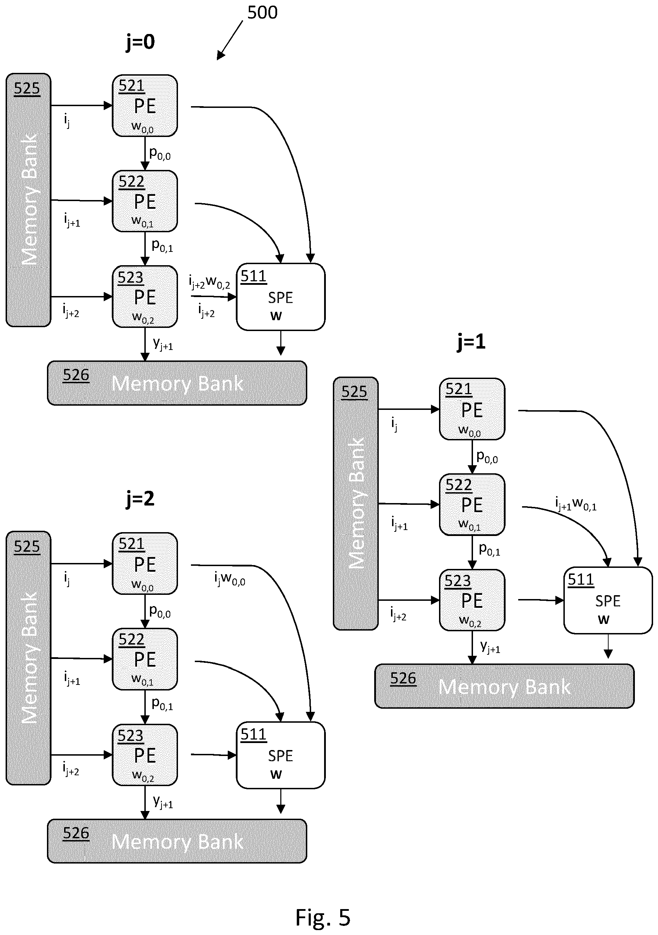

Turning to Figure 5, the comparison of values is shown over the steps j=1 to 3. In the figure, the SPE 511 receives the intermediate results 335, 336 and 337 for summation from the PE's 523, 522 and 521 respectively. Therefore, the SPE 511 in its comparison operation 415 should be able to detect any errors in calculation induced due to single point hardware faults.

The SPE 511 itself may or may not be a separate, specialized PE used to perform the safety checks and calculations needed to verify the correct operation. The inventive concept can be envisaged in a system where there is a separate SPE with dedicated connections and memory. Likewise, the inventive concept can be envisaged in a system with a pool of PE's, most of which are used for the ongoing calculations of the MAC array, and at least one of which is used as an SPE to check the operation of the other PE's. Combinations are also possible, where multiple PE's are available and there is a specialized data connection for the SPE operation, or where global data busses are used for transfer, and there is a dedicated array of PE's as well as a separate SPE to perform the check operation. Likewise, the comparison of results may happen in the SPE, or it may happen in a separate processor. In embodiments, the comparison of results occurs in a central processor or system control processor.

The SPE can also be envisaged as a block implemented in software, or even as a block integrated into an inference or AI model, e.g. at compile time.

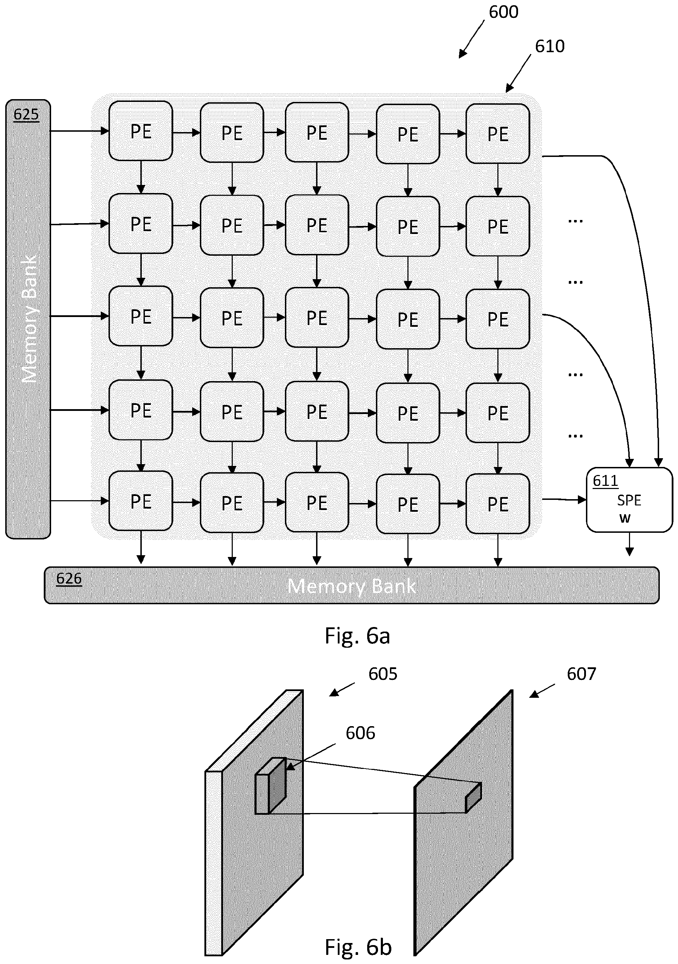

In an exemplary embodiment described here, with a 3x3 convolution, there are 9 multiply operations for the SPE to perform. In addition, for the comparison calculation, there is 1 multiplication and 9 additions, and the comparison step to compare the two results. As the size of the convolution increases, the number of operations for the SPE also increases, but the additional operations can be performed over a longer time or over more computation cycles. For example, a 5x5 convolution case would mean an additional 25 Multiply-Accumulate operations, 1 multiplication and 25 additions, and the 1 comparison of results to identify a failure. An example implementation of such a system is shown in Figures 6. In Figure 6a is shown a typical computing system 600, comprising memory banks 625 and 626 in addition to the array of PE's 610 including the SPE 611. A single convolution layer is shown in Figure 6b with the input data 605, the weights 606 and the resultant output of the layer 607. In the given scenario, assuming 605 to be high resolution feature map of resolution 1024x1024x2 and the weights kernel size of 3x3, this example will generate an output 607 of dimensions 1024x1024x1 with 2x3x3x1=18 parameters or weights in total (for example this might represent the last layer of a Semantic Segmentation Model which classifies each pixel into two classes "object" and "background"). In one implementation, the convolution layer can perform 18 MAC operations per machine cycle in the given array 610 of 25 PE's. A single additional SPE 611 connected to all the PE's in 610 should be able to successfully perform the necessary safety checks as elaborated in Figures 2 to 5. In another implementation multiple blocks of the type shown as 610 may require one or more SPE's in the overall computing system. Other implementations may use different combinations of SPE's in the computing system. There may be a tradeoff between the speed of the verification or checking operation, and the number of SPE's used.

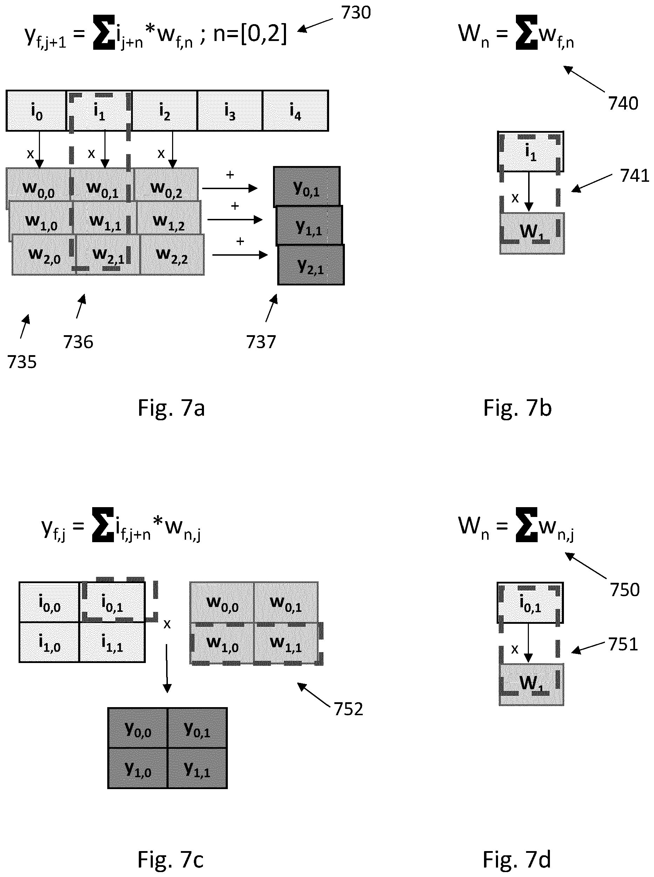

Figures 7 shows the inventive concept applied to implement safety checks for different types of computations. The SPE in embodiments performs the same three steps of operation as described above. However, possible variations and flexibility are shown to implement safety checks for different operations. One such variation is showed in figure 7a, where a convolution layer has multiple filter kernels 735 to generate multiple features as output 737 as per the expression 730. A column of weights is shown as 736. In such a scenario, shown as Figure 7b, the sum of the weights used in SPE may be defined as 740 instead of 440, such that the resultant 741 can be compared to the sum of elements 736 similar to the working of SPE described in 411. This approach or a combination thereof, might be more suited for specific types of convolutions where the same input elements are not multiplied by each weight element of kernel unlike the use-case shown in 335, 336 and 337. For example, convolutions with strides larger than one, point-wise convolution, dilated and atrous convolutions are some types of operations which can be checked using the inventive concept.

Another variation of computation, typical of Matrix Multiplication, is shown in Figures 7c and 7d, which may incorporate the inventive concept of safety check into the design with a similar SPE and its three steps, but with a modified function for the sum of weights as shown in 750, such that the resultant 751 can be compared to the sum of elements 752.

In embodiments, the repetitive operations combined with a systolic movement of data create the possibility to use a separate SPE comprising one or more processing elements to perform a subset of the operations and in that way to verify the operation of a PE array. Indeed, as shown in examples previously, embodiments may address almost all forms of convolution, such as depthwise or group convolutions, or dilated and atrous convolutions, in addition to the strided and pointwise convolutions.

In implementations and embodiments, the inference accelerator engine or MAC array implements one or more layers of a convolutional neural network. For example, in an implementation, the inference accelerator engine implements one or more convolutional layers and/or one or more fully connected layers. In another implementation, the inference accelerator engine implements one or more layers of a recurrent neural network. Generally speaking, an "inference engine" or "inference accelerator engine" is defined as hardware and/or software which, for example, receives image data and generates one or more label probabilities for the image data. In some cases, an "inference engine" or "inference accelerator engine" is referred to as a "classification engine" or a "classifier". In another implementation, an inference accelerator engine may analyze an image or video frame to generate one or more label probabilities for the frame.

Potential use cases include at least eye tracking, object recognition, point cloud estimation, ray tracing, light field modeling, depth tracking, and others.

An inference accelerator engine can be used by any of a variety of different safety-critical applications which vary according to the implementation. For example, in one implementation, inference accelerator engine is used in an automotive application, where the inference accelerator engine may control one or more functions of a self-driving vehicle (i.e., autonomous vehicle), driver-assist vehicle, or advanced driver assistance system. In other implementations, the inference accelerator engine may be trained and customized for other types of use cases. Depending on the implementation, the inference accelerator engine may generate probabilities of classification results for various objects detected in an input image or video frame.

Memory subsystems 125, 126 may include any number and type of memory devices, and the two memory subsystems 125 and 126 may be combined as a single memory or in any other configuration. For example, the type of memory in a memory subsystem can include high-bandwidth memory (HBM), non-volatile memory (NVM), Dynamic Random Access Memory (DRAM), Static Random Access Memory (SRAM), NAND Flash memory, NOR flash memory, Ferroelectric Random Access Memory (FeRAM), or others. Memory subsystems 125 and 126 may be accessible by the inference accelerator engine and by other processor(s). I/O interfaces may include any sort of data transfer bus or channel (e.g., peripheral component interconnect (PCI) bus, PCI-Extended (PCI-X), PCIE (PCI Express) bus, gigabit Ethernet (GBE) bus, universal serial bus (USB)).

In some implementations, the entirety of computing systems 100, 200, 500, 600 or one or more portions thereof are integrated within a robotic system, self-driving vehicle, autonomous drone, surgical tool, or other types of mechanical devices or systems. Indeed, the inventive concept finds application in any system where safety, security and/or reliability of the hardware is needed or desired. It is noted that the number of components of computing system 100 varies from implementation to implementation. For example, in other implementations, there are more or fewer of each component than the number shown in the figures. It is also noted that in other implementations, computing system 100 includes other components not shown in Figure 1 and the other figures. Additionally, in other implementations, computing system 100 is structured in other ways than shown in the figures.

**Claims**

1. A system (100, 600) comprising: a Multiply-Accumulate (MAC) Array (110, 610) comprising multiple processing elements (PE, 122); and a safety processing engine (SPE, 211, 411), wherein the MAC Array is configured to: perform matrix multiplication operations in parallel in multiple PE's to operate a convolution on the MAC Array; perform a subset of the matrix multiplication operations on the SPE; compare the results of the subset of matrix multiplication operations which are performed in parallel in multiple PE's and on the SPE; and determine a failure condition based on a mismatch of the results,

   wherein the matrix multiplication operations comprise matrix multiplication operations of an input data element with different weights of a filter matrix, and wherein the SPE performs a first operation of calculating a sum of the results of the matrix multiplication operations of an input data element with different weights of a filter matrix,
   a second operation of a multiplication of the input data element with a value corresponding to the sum of the different weights, and
   a third operation, following the first operation and the second operation, of a comparison of the result of the first operation with the result of the second operation.

2. The system of claim 1, wherein the comparison of the results of the subset of matrix multiplication operations permits to verify the operation of multiple processing elements of the Multiply-Accumulate Array.

3. The system of claim 1 or 2, wherein the comparison of the results of the subset of matrix multiplication operations permits to verify the operation of all processing elements of the Multiply-Accumulate Array.

4. The system of any previous claim, wherein the SPE sequentially receives input values of an input vector and multiplies each input value by a weight.

5. The system of claim 4 wherein the SPE sequentially receives strided input values comprising a subset of the values of a given input vector.

6. The system of any previous claim, wherein the system comprises a pool of PE's, most of which are used for the ongoing calculations of the MAC array, and at least one of which is used as an SPE to check the operation of the other PE's.

7. A method comprising: performing continuously a matrix operation computation comprising a set of multiply-accumulate operations on an array of Processing Elements (PE's, 122); performing separately and continuously a subset of the multiply-accumulate operations as a verification operation, and comparing the results, wherein the comparing of the results permits to verify if the matrix-operation computation was performed correctly, wherein the multiply-accumulate operations comprise multiply-accumulate operations of an input data element with different weights of a filter matrix, and wherein the verification operation comprises

a first operation to perform a sum of the results of the multiply-accumulate operations of an input data element with different weights of a filter matrix,

a second operation to perform a multiplication of the input data element with a value corresponding to the sum of the different weights, and a third operation, following the first operation and the second operation, to perform a comparison of the result of the first operation with the result of the second operation,

wherein the verification operation is performed in a separate Safety Processing Element (SPE, 211,411).

**Patentansprüche**

1. System (100, 600), das Folgendes umfasst: ein Multiplikations-Akkumulations-Array (MAC-Array) (110, 610), das mehrere Verarbeitungselemente (PE, 122) umfasst; und eine Sicherheitsverarbeitungs-Engine (SPE, 211, 411), wobei das MAC-Array ausgebildet ist um:

Matrixmultiplikationsoperationen parallel in mehreren PE's durchzuführen, um eine Faltung an dem MAC-Array zu betreiben; eine Teilmenge der Matrixmultiplikationsoperationen an der SPE durchzuführen; die Ergebnisse der Teilmenge von Matrixmultiplikationsoperationen, die parallel in mehreren PEs und an der SPE durchgeführt werden, zu vergleichen; und eine Fehlerbedingung basierend auf einer Fehlanpassung der Ergebnisse zu bestimmen, wobei die Matrixmultiplikationsoperationen Matrixmultiplikationsoperationen eines Eingabedatenelements mit unterschiedlichen Gewichtungen einer Filtermatrix umfassen, und wobei die SPE Folgendes durchführt: eine erste Operation zum Berechnen einer Summe der Ergebnisse der Matrixmultiplikationsoperationen eines Eingabedatenelements mit unterschiedlichen Gewichtungen einer Filtermatrix, eine zweite Operation einer Multiplikation des Eingabedatenelements mit einem Wert, der der Summe der unterschiedlichen Gewichtungen entspricht, und eine dritte Operation nach der ersten Operation und der zweiten Operation eines Vergleichs des Ergebnisses der ersten Operation mit dem Ergebnis der zweiten Operation.

2. System nach Anspruch 1, wobei der Vergleich der Ergebnisse der Teilmenge von Matrixmultiplikationsoperationen es ermöglicht, die Operation mehrerer Verarbeitungselemente des Multiplikations-Akkumulations-Arrays zu verifizieren.

3. System nach Anspruch 1 oder 2, wobei der Vergleich der Ergebnisse der Teilmenge von Matrixmultiplikationsoperationen es ermöglicht, die Operation aller Verarbeitungselemente des Multiplikations-Akkumulations-Arrays zu verifizieren.

4. System nach einem der vorhergehenden Ansprüche, wobei die SPE sequenziell Eingabewerte eines Eingabevektors empfängt und jeden Eingabewert mit einer Gewichtung multipliziert.

5. System nach Anspruch 4, wobei die SPE sequenziell gestufte Eingabewerte empfängt, die eine Teilmenge der Werte eines gegebenen Eingabevektors umfassen.

6. System nach einem der vorhergehenden Ansprüche, wobei das System einen Pool von PEs umfasst, von denen die meisten für die laufenden Berechnungen des MAC-Arrays verwendet werden und von denen mindestens eines als SPE verwendet wird, um die Operation der anderen PEs zu überprüfen.

7. Verfahren, das Folgendes umfasst: kontinuierliches Durchführen einer Matrixoperationsberechnung, die einen Satz von Multiplikations-Akkumulationsoperationen an einem Array von Verarbeitungselementen (PEs, 122) umfasst; getrenntes und kontinuierliches Durchführen einer Teilmenge der Multiplikations-Akkumulationsoperationen als eine Verifikationsoperation und Vergleichen der Ergebnisse, wobei das Vergleichen der Ergebnisse es ermöglicht, zu verifizieren, ob die Matrixoperationsberechnung korrekt durchgeführt wurde, wobei die Multiplikations-Akkumulationsoperationen Multiplikations-Akkumulationsoperationen eines Eingabedatenelements mit unterschiedlichen Gewichtungen einer Filtermatrix umfassen und wobei die Verifikationsoperation umfasst

eine erste Operation, um eine Summe der Ergebnisse der Multiplikations-Akkumulationsoperationen eines Eingabedatenelements mit unterschiedlichen Gewichtungen einer Filtermatrix durchzuführen,

eine zweite Operation, um eine Multiplikation des Eingabedatenelements mit einem Wert durchzuführen, der der Summe der unterschiedlichen Gewichtungen entspricht, und

eine dritte Operation, die der ersten Operation und der zweiten Operation folgt, um einen Vergleich des Ergebnisses der ersten Operation mit dem Ergebnis der zweiten Operation durchzuführen,

wobei die Verifikationsoperation in einem separaten Sicherheitsverarbeitungselement (SPE, 211, 411) durchgeführt wird.

## Revendications

1. Système (100, 600) comprenant : une matrice Multiplier-Accumuler (MAC) (110, 610) comprenant de multiples éléments de traitement (PE, 122) ; et un moteur de traitement de sécurité (SPE, 211, 411), dans lequel la matrice MAC est configurée pour réaliser des opérations de multiplication matricielle en parallèle à de multiples PE pour opérer une convolution sur la matrice MAC ; réaliser un sous-ensemble des opérations de multiplication matricielle sur le SPE ; comparer les résultats du sous-ensemble d'opérations de multiplication matricielle qui sont réalisées en parallèle dans de multiples PE et sur le SPE ; et déterminer une condition de défaillance en fonction d'une discordance des résultats,

dans lequel les opérations de multiplication matricielle comprennent des opérations de multiplication matricielle d'un élément de données d'entrée avec différents poids d'une matrice de filtre, et

dans lequel le SPE réalise une première opération de calcul d'une somme des résultats des opérations de multiplication matricielle d'un élément de données d'entrée avec différents poids d'une matrice de filtre,

une deuxième opération d'une multiplication de l'élément de données d'entrée avec une valeur correspondant à la somme des différents poids ; et

une troisième opération, après la première opération et la deuxième opération, d'une comparaison du résultat de la première opération au résultat de la deuxième opération.

2. Système selon la revendication 1, dans lequel la comparaison des résultats du sous-ensemble d'opérations de multiplication matricielle permet de vérifier le fonctionnement de multiples éléments de traitement de la matrice Multiplier-Accumuler.

3. Système selon la revendication 1 ou 2, dans lequel la comparaison des résultats du sous-ensemble d'opérations de multiplication matricielle permet de vérifier le fonctionnement de tous les éléments de traitement de la matrice Multiplier-Accumuler.

4. Système selon toute revendication précédente, dans lequel le SPE reçoit séquentiellement des valeurs d'entrée d'un vecteur d'entrée et multiplie chaque valeur d'entrée par un poids.

5. Système selon la revendication 4 dans lequel le SPE reçoit séquentiellement des valeurs d'entrée de stride comprenant un sous-ensemble des valeurs d'un vecteur d'entrée donné.

6. Système selon toute revendication précédente, le système comprenant un pool de PE, dont la plupart sont utilisés pour les calculs en cours de la matrice MAC, et dont au moins un est utilisé comme SPE pour vérifier le fonctionnement des autres PE.

7. Procédé comprenant : la réalisation continue d'un calcul d'opération matricielle comprenant un ensemble d'opérations multiplier-accumuler sur une matrice d'éléments de traitement (PE, 122) ; la réalisation séparée et continue d'un sous-ensemble des opérations multiplier-accumuler comme opération de vérification, et la comparaison des résultats, dans lequel la comparaison des résultats permet de vérifier que le calcul d'opération matricielle a été réalisé correctement ou non, dans lequel les opérations multiplier-accumuler comprennent un élément de données d'entrée avec différents poids d'une matrice de filtre, et dans lequel l'opération de vérification comprend

une première opération pour réaliser une somme des résultats des opérations de multiplication matricielle d'un élément de données d'entrée avec différents poids d'une matrice de filtre,

une deuxième opération pour réaliser une multiplication de l'élément de données d'entrée avec une valeur correspondant à la somme des différents poids ; et

une troisième opération, après la première opération et la deuxième opération, pour réaliser une comparaison du résultat de la première opération au résultat de la deuxième opération,

dans lequel l'opération de vérification est réalisée dans un élément de traitement de sécurité (SPE, 211, 411) séparé.

Fig. 1a

Fig. 1b

$$y_{j+1} = \sum i_{j+n} * w_{0,n} \; ; \; n=[0,2]$$

Fig. 1c

Fig. 2a

Fig. 2b

$$y_{j+1} = \sum i_{j+n} * w_{0,n} \; ; n=[0,2]$$

$$W = \sum w_{0,n} \; ; n=[0,2]$$

Fig. 2c

$$y_{j+1} = \sum i_{j+n} * w_{0,n} \; ; \; n=[0,2]$$

330

**j=0**

335

331

**j=1**

336

332

**j=2**

337

333

Fig. 3

Fig. 4a

$$W = \sum w_{0,n} \; ; \; n=[0,2]$$

440

441

Fig. 4b

500

**j=0**

**j=1**

**j=2**

Fig. 5

600

610

625

Memory Bank

| PE | PE | PE | PE | PE |
| PE | PE | PE | PE | PE |
| PE | PE | PE | PE | PE |
| PE | PE | PE | PE | PE |
| PE | PE | PE | PE | PE |

...

...

...

...

611
SPE
w

626 Memory Bank

Fig. 6a

605

607

606

Fig. 6b

$$y_{f,j+1} = \sum i_{j+n} * w_{f,n} \; ; \; n=[0,2]$$

Fig. 7a

$$W_n = \sum w_{f,n}$$

Fig. 7b

$$y_{f,j} = \sum i_{f,j+n} * w_{n,j}$$

Fig. 7c

$$W_n = \sum w_{n,j}$$

Fig. 7d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5915082 A
- WO 2011117155 A1

**Non-patent literature cited in the description**

- **B. DONG et al.** *OR-ML: Enhancing Reliability for machine Learning Accelerator with Opportunistic Redundancy,* 2021
- **E. OZEN et al.** Low-Cost Error Detection in Deep Neural Network Accelerators with Linear Algorithmic Checksums. *J. of Electronic Testing,* 2021, vol. 36 (6
- **M. SAFARAPOUR et al.** Algorithmic Level Error Detection in Low Voltage Systolic Array. *IEEE Trans. On Circuits and Systems,* 2021